# EUROPEAN PATENT SPECIFICATION

(11) **EP 3 010 739 B1**
(45) Date of publication and mention of the grant of the patent: **27.11.2019**
(21) Application number: 14814300.1
(22) Date of filing: 16.05.2014
(51) Int. Cl.: B60H 1/34, B60H 1/24, B60S 1/54

(54) **FRONT DEFROSTER NOZZLE DEVICE**
DÜSENVORRICHTUNG FÜR FRONTABTAUANLAGE
DISPOSITIF D'EMBOUT DE DÉGIVRAGE FRONTAL

(30) Priority: 20.06.2013 JP 2013129404
(43) Date of publication of application: 27.04.2016
(73) Proprietor: TOYOTA JIDOSHA KABUSHIKI KAISHA, Toyota-shi, Aichi 471-8571 (JP)
(72) Inventor: TOBAI, Nobuhiro, Kiyosu-shi Aichi 452-8564 (JP); SHIBATA, Minoru, Kiyosu-shi Aichi 452-8564 (JP); MARUTA, Yasuhiro, Kiyosu-shi Aichi 452-8564 (JP); SANJO, Shizuo, Toyota-shi Aichi 471-8571 (JP); UNO, Hidenori, Toyota-shi Aichi 471-8571 (JP); SAKIMOTO, Nobuya, Toyota-shi Aichi 471-8571 (JP)
(74) Representative: Intès, Didier Gérard André
(86) International application number: PCT/JP2014/002603
(87) International publication number: WO 2014/203448

(56) References cited:
- FR-A1- 2 909 935
- JP-A- H11 129 742
- JP-A- H11 348 602
- JP-A- 2010 111 335
- JP-U- S6 248 868
- JP-U- S61 177 907
- US-A- 5 934 988
- US-A- 5 980 379
- US-A1- 2005 239 389
- US-B1- 6 257 975

## Description

### Field

The present invention relates to a front defroster nozzle device for a vehicle and, particularly, to a front defroster nozzle excellent in defrosting performance despite its compact shape.

### Background

As a component of an air conditioning system for a vehicle, a front defroster nozzle is widely used, which is formed in an instrument panel below a windshield. This front defroster nozzle has a blow opening extending narrowly in the direction of vehicle width along the lower end portion of a windshield. The lower end portion of the front defroster nozzle extends into the instrument panel and is connected with the blow outlet of a blower. It is possible to defrost the windshield by sending a current of air from this front defroster nozzle.

Defroster nozzles are known e.g. from JP H11 348602 A, JP H11 129742 A, FR 2 909 935 A1, and JP S61 177907 U which discloses a defroster nozzle according to the preamble of claim 1. A conventional front defroster nozzle has a narrow blow opening extending in the direction of vehicle width. The blow opening is formed over almost the overall length of a windshield along the lower end portion of the windshield, and a current of air is sent from the blow opening to thereby defrost the entire surface of the windshield. However, in recent years, it has become common to provide a head-up display device on an instrument panel. In this case, depending on the place of installation of the head-up display device, this place of installation may interfere with the location of the blow opening of the front defroster nozzle. Accordingly, in order to avoid such interference, there has been a demand to shorten the blow opening of the front defroster nozzle.

However, shortening the blow opening of the front defroster nozzle results in difficulty in sending a current of air over the entire surface of the windshield. To overcome the foregoing problem, in JP 2009-196606 A, a front defroster nozzle device has been proposed, in which a main blow opening is formed further inside the vehicle interior than the head-up display device, and an auxiliary blow opening is formed between the head-up display device and the windshield.

### Citation List

### Patent Literature

PTL 1 : JP2009-196606A

### Summary

### Technical Problem

However, in the front defroster nozzle device described in the PTL 1, the two blow openings, i.e., the main blow opening and the auxiliary blow opening, have to be located in separate positions, and respective channels for connecting the blow openings and a blower are also needed, thus complicating the shape of the front defroster nozzle device, resulting in an increased number of steps in molding and an increased number of steps in assembly.

The present invention has been proposed to solve the same problem as the PTL 1. However, the object of the present invention is to exhibit, with a simpler structure, a defrosting performance equal to that of a conventional defroster nozzle device.

### Solution to Problem

A front defroster nozzle device according to the present invention provided to solve the foregoing problem is defined in appended claim 1. In particular, it includes a narrow blow opening formed for arrangement in an instrument panel below a windshield of a vehicle and extending in the direction of vehicle width. The nozzle device is such that the blow opening is divided into a plurality of sections in longitudinal direction of the vehicle, one of which is a front blow-opening that opens on the same side as the windshield and the other of which is a rear blow-opening that is adjacent to the front blow-opening and opens further inside the vehicle interior than the front blow-opening, wherein a current of air from the front blow-opening is mainly sent to the left and right end portions of the windshield and a current of air from the rear blow-opening is mainly sent to the central portion of the windshield. Furthermore, a method of defrosting a windshield by using the front defroster nozzle device is defined in claim 4. The dependent claims define optional aspects.

### Advantageous Effects of Invention

In the front defroster nozzle device according to the invention, a current of air from the front blow-opening is mainly sent to the left and right end portions of the windshield and a current of air from the rear blow-opening is mainly sent to the central portion of the windshield. With such a configuration, the problem that a current of air sent to a left or right end portion is caught up with a current of air sent to the central portion is inhibited. Additionally, a current of air sent to the central portion is prevented from being affected by a current of air sent to the left or right end portion. Accordingly, a current of air can be sent almost evenly over the entire surface of the windshield, and an almost identical defrosting performance is exhibited over the entire surface of the windshield.

According to the invention, making the volume of air blown from the rear blow-opening per unit time larger than that from the front blow-opening further ensures the action described above, thus improving the defrosting performance over the entire surface of the windshield.

### Brief Description of Drawings

[fig.1] Fig. 1 is a schematic front view as seen from a vehicle interior, which shows the installed State of a front defroster nozzle device in a known example.
[fig.2]Fig. 2 is a schematic front view as seen from a vehicle interior, which shows the installed state of an improved front defroster nozzle device in a known example.
[fig.3]Fig. 3 is a wind speed distribution map on a windshield, obtained by sending a current of air from the front defroster nozzle device in Fig. 2.
[fig.4]Fig 4 is a wind speed distribution map on a windshield in a case where the front defroster nozzle device in Fig. 2 is provided with a guide fin.
[fig.5]Fig. 5 is a perspective view of a front defroster nozzle device according to Embodiment 1.
[fig.6]Fig. 6 is a sectional view of the front defroster nozzle device according to Embodiment 1.
[fig.7]Fig 7 is a schematic front view as seen from a vehicle interior, which shows the installed state of the front defroster nozzle device according to Embodiment 1.
[fig.8]Fig. 8 is a wind speed distribution map on a windshield, obtained by sending a current of air from the front defroster nozzle device in Embodiment 1.
[fig.9]Fig. 9 is a wind speed distribution map on a windshield, obtained by sending a current of air from a front defroster nozzle device in Comparative Example 1.
[fig.10]Fig. 10 is a wind speed distribution map on a windshield, obtained by sending a current of air from a front defroster nozzle device in Comparative Example 2.

### Description of Embodiments

A front defroster nozzle device according to the present invention has a narrow blow opening extending in the direction of vehicle width. This blow opening opens in an instrument panel below a windshield. A front defroster nozzle generally includes an upper duct having a blow opening and a lower duct connected to the blow outlet of a blower. The upper duct and lower duct are integrated, thereby forming an air channel inside. A current of air let out from the blow outlet of the blower flows into the lower duct, is carried through the air channel, and is blown out toward the windshield from the blow opening.

The blow opening is divided into a plurality of sections in the longitudinal direction of the vehicle, thereby providing a front blow-opening, which opens on the same side as the windshield, and a rear blow-opening, which is adjacent to the front blow-opening and opens further inside the vehicle interior than the front blow-opening. The respective numbers of front blow-openings and rear blow-openings may be one and one, two in total, one and two or vice versa, three in total, two and two, four in total, or the like.

One blow opening may be formed in the instrument panel or, if needed, a plurality of blow openings may be formed in the instrument panel in the direction of vehicle width. In the latter case, the front defroster nozzle device is provided with a plurality of upper ducts. In this case, the configuration may be such that a single lower duct has a channel that branches off to a plurality of upper ducts, or such that there are as many lower ducts as upper ducts.

The most outstanding characteristic of the present invention is that a current of air from the front blow-opening is mainly sent to the left and right end portions of the windshield and a current of air from the rear blow-opening is mainly sent to the central portion of the windshield. As described below in a comparative example, where this configuration is reversed such that a current of air from a rear blow-opening is mainly sent to the left and right end portions of a windshield and a current of air from a front blow-opening is mainly sent to the central portion of the windshield, the current of air from the rear blow-opening is caught up with the current of air from the front blow-opening. Therefore, although the current of air sent to the left and right end portions increases, the current of air sent to the central and upper half portions of the windshield is insufficient.

Even if the volume of air blown from each of the front and rear blow-openings per unit time is changed and the volume of air blown from the front blow-opening per unit time is increased in order to overcome the foregoing problem, the current of air sent to the upper portion of the windshield is insufficient.

Configuring the front defroster nozzle device such that a current of air from the front blow-opening is mainly sent to the left and right end portions of a windshield and a current of air from the rear blow-opening is mainly sent to the central portion of the windshield enables a current of air to be efficiently sent to the entire surface of the windshield. This is because the currents of air sent from the front blow-opening and the rear blow-opening are rendered less likely to affect each other.

The front blow-opening is located nearer to the windshield than the rear blow-opening. According to the invention, the volume of air blown from the rear blow-opening per unit time is larger than that of air blown from the front blow-opening per unit time. This makes it possible to send a current of air over the entire surface of the windshield almost evenly, thus exhibiting almost identical defrosting performance over the entire surface of the windshield.

For example, the volume of air blown from the front blow-opening can be 30 to 40% of the total volume and that of air blown from the rear blow-opening can be 60 to 70% thereof. To make the volume of air from the front blow-opening and that from the rear blow-opening different from each other, a method may be used in which the respective opening areas are made different from each other or in which the respective volumes of air supplied to the front blow-opening and rear blow-opening from the lower duct are made different from each other.

In order that a current of air from the front blow-opening be mainly sent to the left and right end portions of the windshield or a current of air from the rear blow-opening be mainly sent to the central portion of the windshield, the inclination of the channel of the upper duct extending to the front blow-opening and rear blow-opening can be adjusted or an appropriately inclining fin can be formed in each of the front and rear blow-openings.

An embodiment of the present invention will be explained in detail below using known examples and comparative examples.

### Known Examples

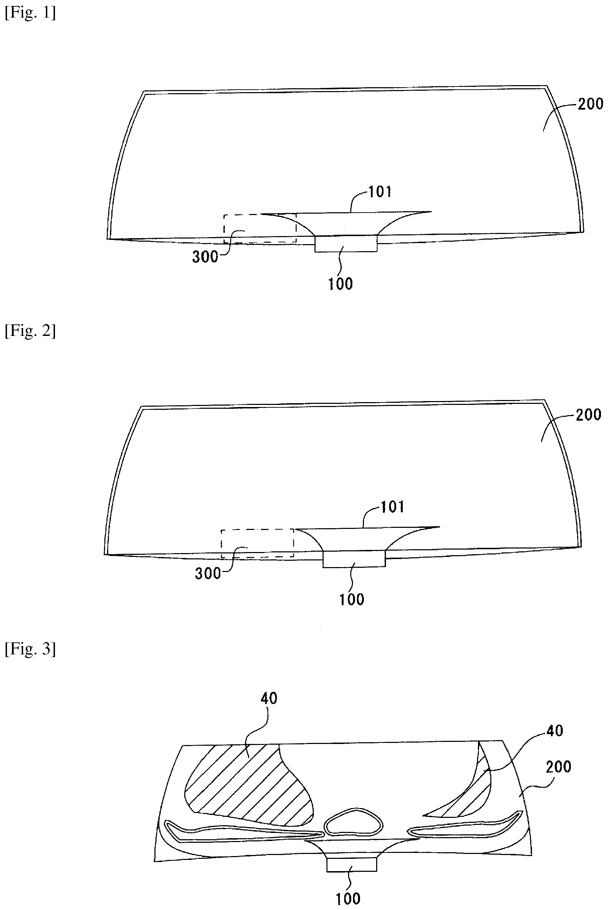

As shown in Fig. 1, a conventional front defroster nozzle device 100 includes one 600-mm narrow blow opening and is fixed to an instrument panel such that the center line of a windshield 200 coincides with the center line of the blow opening in the direction of vehicle width. Fins are provided in the blow opening 101 such that its inclination structure is substantially bilaterally-symmetrical, and a current of air can be sent over the entire surface of the windshield without any problems.

As shown in Fig. 1, certain recent automobiles (vehicles with the steering wheel on the left) are provided with a head-up display device 300 on an instrument panel on the same side as the driver's seat. In such a case, it is difficult to form a blow opening as long as 600 mm in the instrument panel and it is required to reduce the entire length of the blow opening 101 of a front defroster nozzle device 100 to about 450 mm. However, the blow opening 101 shortened bilaterally symmetrically results in insufficient volume of air blown to left and right end portions of the windshield 200. To overcome this problem, as shown in Fig. 2, it has been proposed that the center line of the front defroster nozzle device 100 in the direction of vehicle width be displaced from the center line of the windshield 200 and opposite the head-up display device 300 in the direction of vehicle width and, in addition, that the overall length of the blow opening 101 be set to about 450 mm by making the blow opening 101 shorter on the same side as the head-up display device 300 and longer on the opposite side.

A simulation of wind speed distribution on the windshield 200 in this case was performed using a CFD analysis (a wind speed simulation). However, as shown in Fig. 3, it is found that regions 40 (shadow areas) with insufficient wind speed occurred on the driver's seat and front passenger's seat sides of the windshield 200 and the volume of air and wind speed are insufficient in each region 40.

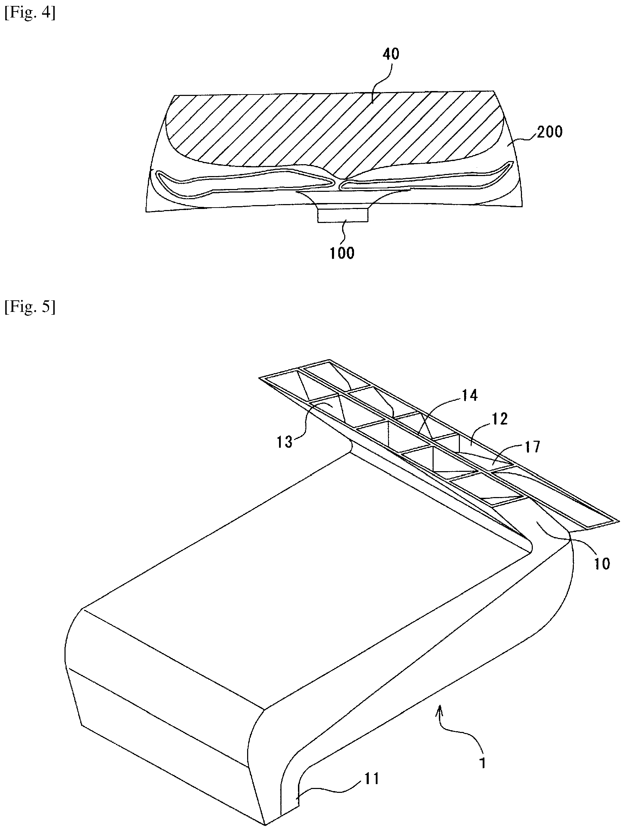

Therefore, in order to send currents of more air to the driver's seat and front passenger's seat sides of the windshield 200, guide fins were arranged in the blow opening 101. As a result, an improvement was made in wind speed on the driver's seat and front passenger's seat sides. However, as shown in Fig. 4, wind speed is insufficient in the upper half of the windshield 200. Therefore, it is found that where the front defroster nozzle device 100 with one conventional blow opening 101 has an overall length of 450 mm, it is difficult for this device 100 to send a current of air evenly over the entire windshield 200, and also that wind speed distribution significantly changes depending on the position or shape of the guide fin, hence making it extremely difficult to achieve optimum tuning.

### Embodiment 1

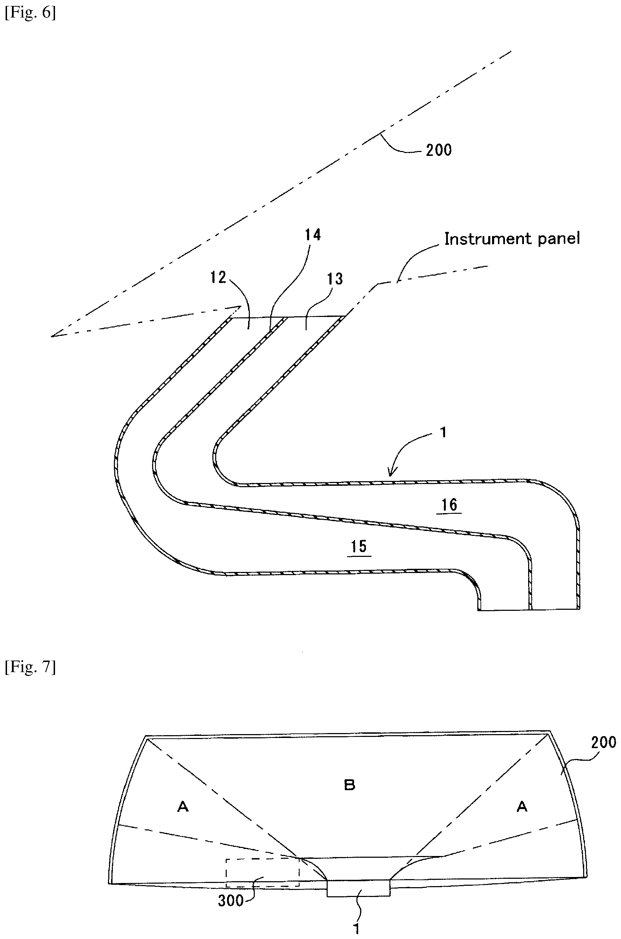

Figs. 5 and 6 show a front defroster nozzle device 1 according to the present invention. This defroster nozzle device 1 includes an upper duct 10 and a lower duct 11 connected to the blow outlet of a blower, not shown. A narrow front blow-opening 12 and a narrow rear blow-opening 13 are formed in the leading end of the upper duct 10. The front blow-opening 12 and rear blow-opening 13 are separated by the partition 14. The partition 14 extends from the upper duct 10 to the lower duct 11. Formed in the upper duct 10 and lower duct 11 are a front channel 15 and a rear channel 16 separated by the partition 14, as shown in Fig. 6.

This front defroster nozzle device 1 is used by its being fixed to an instrument panel such that the front blow-opening 12 opens on the same side as a windshield 200 and the rear blow-opening 13 opens further inside the vehicle interior than the front blow-opening 12. The end portion of the lower duct 11 is connected to the blower, not shown. The volume of air blown from the front blow-opening 12 is set so as to be 35% of the total volume, and that of air blown from the rear blow-opening 13 is set so as to be 65% thereof.

As shown in Fig. 7, a head-up display device 300 is provided on the driver's seat side of the instrument panel. Therefore, the front defroster nozzle device 1 is arranged such that its center line is displaced from the center line of a windshield 200 toward the front passenger's seat side in the direction of vehicle width. On the front passenger's seat side, the front blow-opening 12 is formed longer than the rear blow-opening 13. A current of air from the front blow-opening 12 is mainly sent to the left and right areas (A) (indicated by alternate long and short dashed lines) by the angles of inclination of the internal wall surface of the front channel 15 and the angle of inclination of a guide fin 17 provided in the front blow-opening 12. The portion of the area (A) occupies 35% of the area of the windshield 200. On the other hand, the current of air from the rear blow-opening 13 is mainly sent to the portion of a trapezoidal area (B) located centrally, shown in Fig. 7, by the angle of inclination of the internal wall surface of the rear channel 16 and the angle of inclination of a guide fin provided in the rear blow-opening 13. The portion of the area (B) occupies 65% of the area of the windshield 200.

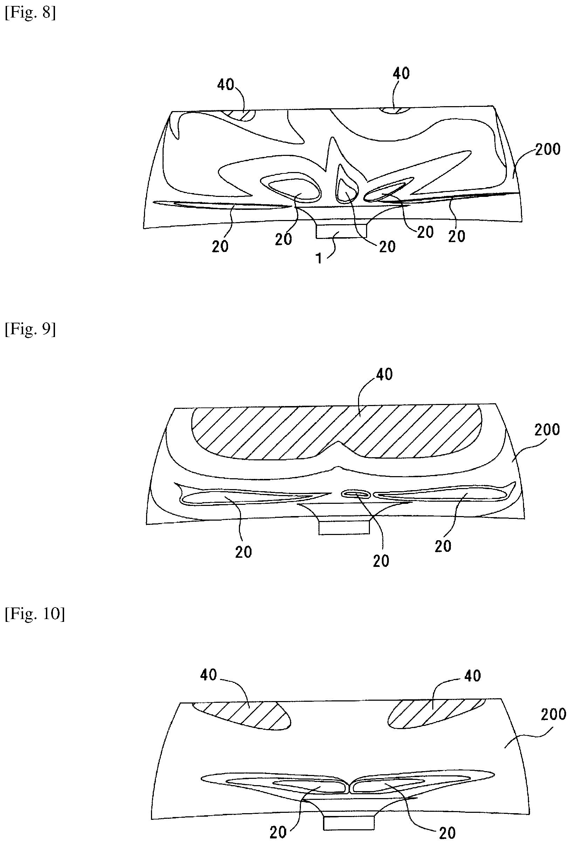

A simulation of blowing by the front defroster nozzle device according to the embodiment was performed. Fig. 8 shows a wind speed distribution map resulting from the simulation. It is found that, on average, regions 20 with high wind speed are present on the left and right sides of the windshield 200 and the central portion thereof, and that the wind speed smoothly changes from the lower portion of the windshield 200 to the upper portion thereof. Regions 40 with insufficient wind speed are present to a small extent only in the upper portion.

That is, the front defroster nozzle device in the present embodiment exhibits a defrosting performance equal to conventional defrosting performance, while coexisting with the head-up display 300.

### Comparative Example 1

A front defroster nozzle device according to the comparative example 1 has a double structure identical to that in Embodiment 1 except that a blow opening identical in structure to the rear blow-opening 13 in Embodiment 1 opens on the same side as a windshield 200 and a blow opening identical in structure to the front blow-opening 12 in Embodiment 1 opens further inside the vehicle interior than the former blow opening. A current of air from the blow opening on the same side as the windshield 200 is sent to the central portion of a windshield 200 whereas a current of air from the blow opening further inside the vehicle interior is sent to the left and right end portions of the windshield 200. That is, in Comparative Example 1, the blow openings in Embodiment 1 are turned the other way, back to front. However, it is configured such that the volume of air blown from the blow opening on the same side as the windshield 200 is 50% of the total volume and the volume of air blown from the blow opening further inside the vehicle is 50% thereof.

A simulation of blowing by the front defroster nozzle device according to the comparative example was performed. Fig. 9 shows a wind speed distribution map resulting from the simulation. It is found that the upper half of the windshield 200 is a region 40 with insufficient wind speed.

### Comparative Example 2

A front defroster nozzle device in Comparative Example 1 was adjusted so that the volume of air blown from the blow opening on the same side as the windshield 200 was 70% of the total volume of air and the volume of air blown from the blow opening further inside the vehicle interior was 30% thereof. A blowing simulation was performed in the same manner, and Fig. 10 shows a wind speed distribution map resulting from the simulation. It is found that regions 40 with insufficient wind speeds have decreased but the upper part of the windshield 200 still have insufficient wind speed, as compared to Embodiment 1.

### Reference Signs List

1/ Front defroster nozzle device
12/ Front blow-opening
13/ Rear blow-opening
14/ Partition
15/ Front channel
16/ Rear channel
17/ Guide fin
20/ Region with high wind speed
40/ Region with insufficient wind speed
100/ Front defroster nozzle device
200/ Windshield
300/ Head-up display device

## Claims

1. A front defroster nozzle device (1) including a narrow blow opening configured to be formed for arrangement in an instrument panel below a windshield (200) of a vehicle and extending in direction of vehicle width,
wherein the blow opening is divided into a plurality of sections in longitudinal direction of the vehicle, one of which is a front blow-opening (12) configured to open on the same side as the windshield (200) and the other of which is a rear blow-opening (13) that is adjacent to the front blow-opening and configured to open further inside the vehicle interior than the front blow-opening (12), and configured so that a current of air from the front blow-opening (12) is mainly sent to left and right end portions of the windshield (200) and a current of air from the rear blow-opening (13) is mainly sent to a central portion of the windshield (200),
**characterized in that** the front defroster nozzle device (1) is configured so that a volume of air blown from the rear blow-opening (13) per unit time is larger than a volume of air blown from the front blow-opening (12) per unit time, and the front defroster nozzle device (1) includes a blow outlet, which is divided into the front blow-opening (12) and the rear blow-opening (13) by a partition (14).

2. The front defroster nozzle device (1) according to claim 1, configured so that the volume of air blown from the front blow-opening (12) is set to be in an inclusive range from 30% to 40% of the total volume, and the volume of air blown from the rear blow-opening (13) is set to be in an inclusive range from 60% to 70% of the total volume.

3. The front defroster nozzle device (1) according to Claim 1 or 2, including an upper duct (10) having the blow opening and a lower duct (11) configured to be connected to the blow outlet of a blower.

4. A method of defrosting a windshield (200) by using the front defroster nozzle device (1) according to any one of Claims 1 to 3, comprising providing air to the front defroster nozzle device (1) so that a volume of air blown from the rear blow-opening (13) per unit time is larger than a volume of air blown from the front blow-opening (12) per unit time.

5. A method of defrosting a windshield (200) according to Claim 4, wherein the volume of air blown from the front blow-opening (12) is set to be in an inclusive range from 30% to 40% of the total volume, and the volume of air blown from the rear blow-opening (13) is set to be in an inclusive range from 60% to 70% of the total volume.

## Patentansprüche

1. Vordere Enteiserdüsenvorrichtung (1) mit einer schmalen Blasöffnung, die konfiguriert ist, um zur Anordnung in einer Instrumententafel unterhalb einer Windschutzscheibe (200) eines Fahrzeugs ausgebildet zu werden und die sich in Richtung der Fahrzeugbreite erstreckt,
wobei die Blasöffnung in eine Vielzahl von Abschnitten in Längsrichtung des Fahrzeugs unterteilt ist, von denen einer eine vordere Blasöffnung (12) ist, die konfiguriert ist, um sich auf der gleichen Seite wie die Windschutzscheibe (200) zu öffnen, und der andere eine hintere Blasöffnung (13) ist, die an die vordere Blasöffnung angrenzt und konfiguriert ist, um sich weiter innerhalb des Fahrzeuginnenraums zu öffnen als die vordere Blasöffnung (12), und konfiguriert, so dass ein Luftstrom von der vorderen Blasöffnung (12) hauptsächlich zu den linken und rechten Endabschnitten der Windschutzscheibe (200) und ein Luftstrom von der hinteren Blasöffnung (13) hauptsächlich zu einem zentralen Abschnitt der Windschutzscheibe (200) geleitet wird,
**dadurch gekennzeichnet, dass** die vordere Enteiserdüsenvorrichtung (1) so konfiguriert ist, dass ein Luftvolumen, das von der hinteren Blasöffnung (13) pro Zeiteinheit geblasen wird, größer ist als ein Luftvolumen, das von der vorderen Blasöffnung (12) pro Zeiteinheit geblasen wird, und die vordere Enteiserdüsenvorrichtung (1) einen Blasauslass beinhaltet, der durch eine Trennwand (14) in die vordere Blasöffnung (12) und die hintere Blasöffnung (13) unterteilt ist.

2. Vordere Enteiserdüsenvorrichtung (1) nach Anspruch 1, die so konfiguriert ist, dass das von der vorderen Blasöffnung (12) geblasene Luftvolumen so eingestellt ist, dass es in einem inklusiven Bereich von 30 % bis 40 % des Gesamtvolumens liegt, und das von der hinteren Blasöffnung (13) geblasene Luftvolumen so eingestellt ist, dass es in einem inklusiven Bereich von 60 % bis 70 % des Gesamtvolumens liegt.

3. Vordere Enteiserdüsenvorrichtung (1) nach Anspruch 1 oder 2, die einen oberen Kanal (10) mit der Blasöffnung und einen unteren Kanal (11) umfasst, der konfiguriert ist, um mit dem Blasauslass eines Gebläses verbunden zu werden.

4. Verfahren zum Enteisen einer Windschutzscheibe (200) unter Verwendung der vorderen Enteiserdüsenvorrichtung (1) nach einem der Ansprüche 1 bis 3, umfassend das Bereitstellen von Luft an die vordere Enteiserdüsenvorrichtung (1), so dass ein Luftvolumen, das aus der hinteren Blasöffnung (13) pro Zeiteinheit geblasen wird, größer ist als ein Luftvolumen, das aus der vorderen Blasöffnung (12) pro Zeiteinheit geblasen wird.

5. Verfahren zum Enteisen einer Windschutzscheibe (200) nach Anspruch 4, wobei das von der vorderen Blasöffnung (12) geblasene Luftvolumen so eingestellt ist, dass es in einem inklusiven Bereich von 30 % bis 40 % des Gesamtvolumens liegt, und das von der hinteren Blasöffnung (13) geblasene Luftvolumen so eingestellt ist, dass es in einem inklusiven Bereich von 60 % bis 70 % des Gesamtvolumens liegt.

## Revendications

1. Dispositif de buse de dégivrage avant (1) comprenant une ouverture de soufflage étroite configurée pour être formée pour un agencement dans un tableau de bord sous un pare-brise (200) d'un véhicule et s'étendant dans une direction de largeur de véhicule,
dans lequel l'ouverture de soufflage est divisée en une pluralité de sections dans une direction longitudinale du véhicule, dont l'une est une ouverture de soufflage avant (12) configurée pour s'ouvrir du même côté que le pare-brise (200) et dont l'autre est une ouverture de soufflage arrière (13) qui est adjacente à l'ouverture de soufflage avant et configurée pour s'ouvrir davantage à l'intérieur de l'intérieur de véhicule que l'ouverture de soufflage avant (12), et configurée de telle sorte qu'un courant d'air provenant de l'ouverture de soufflage avant (12) est principalement envoyé vers des parties d'extrémité gauche et droite du pare-brise (200) et un courant d'air provenant de l'ouverture de soufflage arrière (13) est principalement envoyé vers une partie centrale du pare-brise (200),
**caractérisé en ce que** le dispositif de buse de dégivrage avant (1) est configuré de telle sorte qu'un volume d'air soufflé par l'ouverture de soufflage arrière (13) par unité de temps est plus grand qu'un volume d'air soufflé par l'ouverture de soufflage avant (12) par unité de temps, et le dispositif de buse de dégivrage avant (1) comprend une sortie de soufflage, qui est divisée en l'ouverture de soufflage avant (12) et l'ouverture de soufflage arrière (13) grâce à une cloison (14).

2. Dispositif de buse de dégivrage avant (1) selon la revendication 1, configuré de telle sorte que le volume d'air soufflé par l'ouverture de soufflage avant (12) est prévu pour être dans une plage inclusive de 30% à 40% du volume total, et le volume d'air soufflé par l'ouverture de soufflage arrière (13) est prévu pour être dans une plage inclusive de 60% à 70% du volume total.

3. Dispositif de buse de dégivrage avant (1) selon la revendication 1 ou 2, comprenant un conduit supérieur (10) ayant l'ouverture de soufflage et un conduit inférieur (11) configuré pour être connecté à la sortie de soufflage d'un ventilateur.

4. Procédé de dégivrage d'un pare-brise (200) en utilisant le dispositif de buse de dégivrage avant (1) selon l'une quelconque des revendications 1 à 3, comportant le fait de délivrer de l'air au dispositif de buse de dégivrage avant (1) de telle sorte qu'un volume d'air soufflé par l'ouverture de soufflage arrière (13) par unité de temps est plus grand qu'un volume d'air soufflé par l'ouverture de soufflage avant (12) par unité de temps.

5. Procédé de dégivrage d'un pare-brise (200) selon la revendication 4, selon lequel le volume d'air soufflé par l'ouverture de soufflage avant (12) est prévu pour être dans une plage inclusive de 30% à 40% du volume total, et le volume d'air soufflé par l'ouverture de soufflage arrière (13) est prévu pour être dans une plage inclusive de 60% à 70% du volume total.
